# EUROPÄISCHE PATENTSCHRIFT

(11) **EP 0 713 277 B1**
(45) Veröffentlichungstag und Bekanntmachung des Hinweises auf die Patenterteilung: **30.09.1998**
(21) Anmeldenummer: 95118119.7
(22) Anmeldetag: 17.11.1995
(51) Int. Cl.: H02G 3/00, H02G 3/06, H02G 15/007

(54) **Gehäuse mit Vorrichtung zur Halterung von Anschlusskabeln**
Housing with connection cables strain relief device
Logement avec dispositif de retenue des câbles de connexion

(30) Priorität: 19.11.1994 DE 4441230
(43) Veröffentlichungstag der Anmeldung: 22.05.1996
(73) Patentinhaber: ALCATEL ALSTHOM COMPAGNIE GENERALE D'ELECTRICITE, 75008 Paris (FR)
(72) Erfinder: Amberger, Reinhard, D-70499 Stuttgart (DE)
(74) Vertreter: Schätzle, Albin, Dipl.-Phys.

(56) Entgegenhaltungen:
- DE-A- 3 930 781
- DE-U- 8 417 683
- IBM TECHNICAL DISCLOSURE BULLETIN, Bd. 8, Nr. 5, November 1965, NEW YORK, US, Seite 722; FOYTLIN: 'RIGHT-ANGLE STRAIN RELIEF CLAMP'

## Beschreibung

Die Erfindung betrifft ein Gehäuse mit Vorrichtung zur zugentlasteten Halterung von Anschlußkabeln der im Oberbegriff des Anspruchs 1 näher bezeichneten Ausführung. Gehäuse mit derartigen Vorrichtungen werden insbesondere in Systemen der elektrischen und optischen Nachrichtentechnik verwendet.

Aus der DE 40 08 840 C1 ist ein Gehäuse mit Verteilereinrichtung für Lichtwellenleiter bekannt, bei dem die Vorrichtung zur zugentlasteten Halterung der Anschlußkabel aus mehreren im Gehäuse angeordneten Kabelschellen besteht. Mit jeder Kabelschelle wird ein Anschlußkabel durch Eindrücken der Kabelschelle in ein entsprechendes Loch der Trägerplatte innerhalb des Gehäuses befestigt.

Ein Gehäuse mit Kabelschellenbefestigung eines Anschlußkabels und weiteren, durch eine Öffnung in das Gehäuse geführten Glasfaserleitungen, ist in der DE 41 33 372 C2 beschrieben. Die Glasfaserleitungen enden in Steckern, die mit im Gehäuse an einem Blechwinkel befestigten Kupplungen verbunden sind. Eine gesonderte, zugentlastende Halterung der Glasfaserleitungen ist nicht vorhanden.

Ferner ist aus der DE 39 30 781 C2 noch eine Telekommunikations-Steckdose bekannt, bei der außen am Dosengehäuse eine aus Abdeckkappen und Steckeinsätzen bestehende Abdeckanordnung vorgesehen ist, die in bezug auf die Vorderseite des Dosengehäuses eine parallele oder schräge Leitungsführung gestattet.

Ein Gehäuse mit Vorrichtung zur zugentlasteten Halterung von Anschlußkabeln nach dem Oberbegriff des Anspruchs 1 ist aus der DE 92 00 154 U1 bekannt. Bei dem Gehäuse werden mittels in die Bodenplatte gestanzter Ausschnitte (Fig. 2) Haltekämme mit Zinken gebildet, an welche die Anschlußkabel mit handelsüblichen Kabelbindern befestigt werden. Die Anordnung der Kabelzugentlastung innerhalb des Gehäuses beansprucht jedoch ein häufig nicht ausreichend zur Verfügung stehendes Gehäusevolumen. Außerdem besteht bei der Fixierung der Anschlußkabel mittels Kabelbindern die Gefahr der Kabeleinschnürung, die je nach Kabeltyp zu Funktionsstörungen von im Gehäuse untergebrachten Einrichtungen führen können.

Der Erfindung liegt die Aufgabe zugrunde, eine einfach an einem Gehäuse außen anbringbare Vorrichtung zur zugentlasteten Halterung von Anschlußkabeln zu schaffen, die eine schonende und mechanisch geschützte Befestigung von druckempfindlichen Anschlußkabeln gestattet. Diese Aufgabe wird erfindungsgemäß mit den im Anspruch 1 angegebenen Merkmalen gelöst. Ausgestaltungen der Vorrichtung sind den Unteransprüchen und erzielbare Vorteile der Beschreibung zu entnehmen.

Die Erfindung wird anhand eines in Zeichnungen dargestellten Ausführungsbeispieles wie folgt näher beschrieben. In den Zeichnungen zeigen:
- Fig. 1: einen Ausschnitt einer Gehäusewand mit zugentlastet gehaltenem Anschlußkabel, während der Montage einer Kappe, in perspektivischer Ansicht;
- Fig. 2: einen Ausschnitt eines Gehäuses mit zugentlastet gehaltenem Anschlußkabel und der an einer Gehäusewand befestigten Kappe, teilweise geschnitten, in einer Seitenansicht.

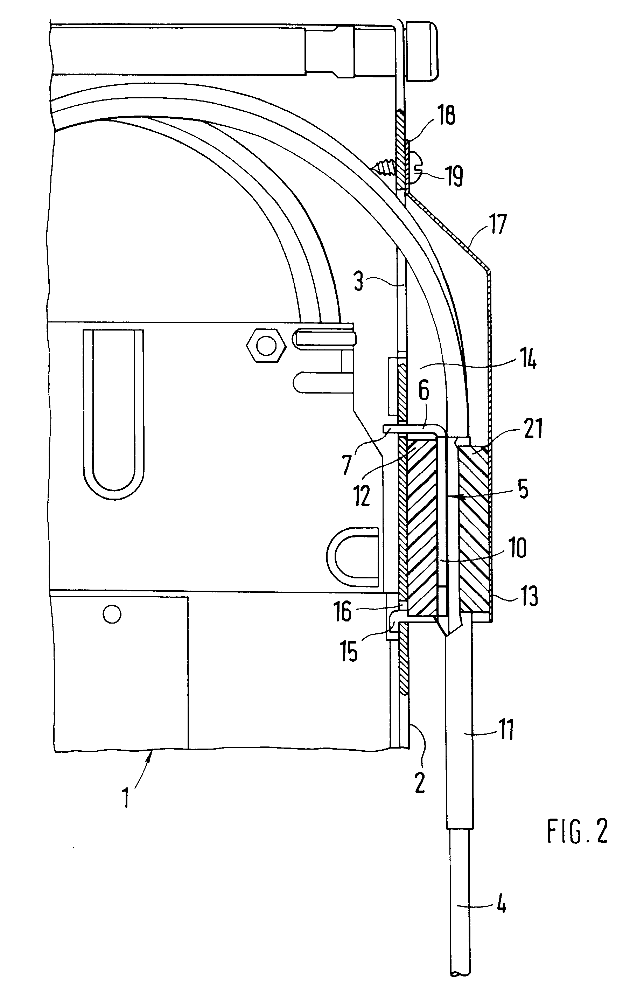

In der Zeichnung mit der Fig. 2 ist das Gehäuse mit 1 und eine Gehäusewand davon allgemein mit 2 bezeichnet. Bei der Gehäusewand 2 kann es sich um einen beliebigen Teil eines Gehäuses 1 handeln, wie beispielsweise um eine Seiten- oder Rückwand oder auch um die Frontplatte des rahmenförmigen Gehäuses einer Steckbaugruppe.

Das dargestellte Ausführungsbeispiel der Gehäusewand 2 hat wenigstens eine rechteckige Öffnung 3 zum Hindurchführen von Anschlußkabeln 4. Anstelle einer größeren Öffnung 3 können jedoch auch mehrere kleine, bedarfsweise auch runde Öffnungen vorgesehen werden.

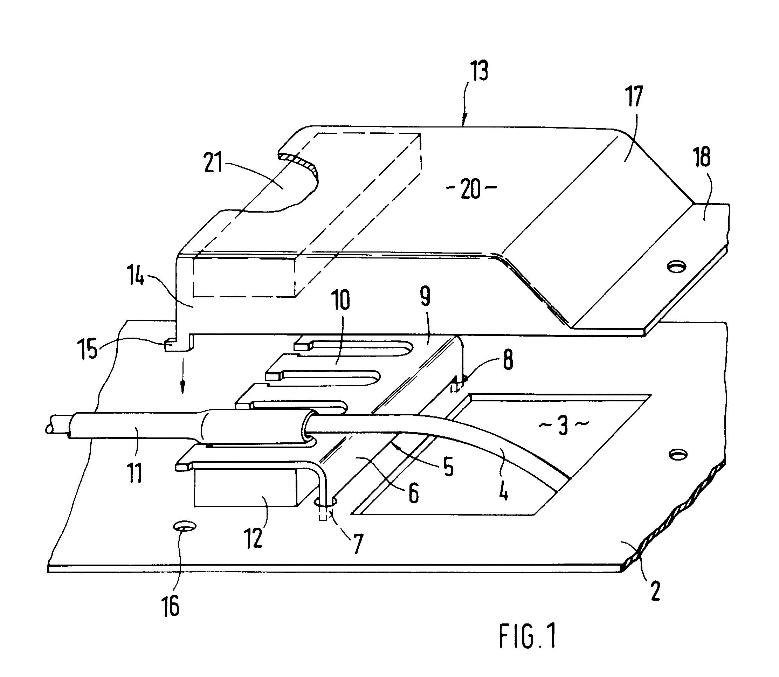

Wie die Fig. 1 und 2 zeigen, ist in geringem parallelem Abstand zum längsseitigen Rand der rechteckigen Öffnung 3 ein Haltekamm angeordnet. Dieser besteht aus einem Winkelstück 5 mit L-förmigem Querschnitt, das vorzugsweise ein aus Blech einstückig hergestelltes Stanzbiegeteil ist. Der kürzere Schenkel 6 des Winkelstücks 5 hat am unteren Ende zwei vorstehende Lappen 7, die so verdrehsicher in komplementäre Löcher 8 der Gehäusewand 2 eingreifen, daß der Schenkel 6 senkrecht auf der Gehäusewand steht und der längere Schenkel 9 einen parallelen Abstand zur Gehäusewand 2 hat.

Der lange Schenkel 9 ist in kammartige Zinken 10 aufgeteilt, die sich senkrecht zur Biegekante des Winkelstücks 5 erstrecken. Die Zinken 10 dienen zur Befestigung von vorzugsweise je einem durch die Öffnung 3 in das Gehäuse 1 führenden Anschlußkabel 4 mittels eines Schrumpfschlauches 11. Die Zinken haben dafür eine entsprechend geeignete Länge, die ein Mehrfaches des Kabeldurchmessers beträgt. Außerdem weisen die Zinken 10 am freien Ende jeweils eine Verbreiterung auf, welche die Schrumpfschläuche 11 mit den Anschlußkabeln 4 rutschfest am Haltekamm fixieren. Das Winkelstück 5 kann entweder die benötigte Anzahl von Zinken 10 aufweisen oder so gestaltet sein, daß zur Typenreduzierung die maximal benötigte Anzahl von Zinken 10 vorgehalten wird.

Die Schrumpfschlauch-Befestigung der Anschlußkabel 4 hat den Vorteil, daß letztere im Bereich der vollständigen Zinkenlänge am ganzen Umfang erfaßt werden. Einschnürungen können nicht auftreten, wodurch diese Befestigungsart für Glasfaser- oder Mikrokoaxialkabel und auch für andere druckempfindliche Anschlußkabel 4 besonders geeignet ist. Die verwendeten Schrumpfschläuche 11 sind länger als die Zinken 10, häufig doppelt so lang, wodurch die überstehenden Schlauchenden den Anschlußkabeln 4 einen guten Knickschutz bieten.

Die Anschlußkabel 4 werden bei der Montage zweckmäßigerweise erst am Winkelstück 5 befestigt und dieses danach zusammen mit den Anschlußkabeln 4 lose in die Löcher 8 der Gehäusewand 2 eingesetzt. Zuvor wird der lange Schenkel 9 des Winkelstücks 5 mit z.B. aus einem aufgeschäumten Kunststoff oder einem anderen geeigneten Material bestehenden elastischen Kissen 12 unterlegt, das eine weiche Auflage bildet und beispielsweise selbstklebend an der Gehäusewand 2 befestigt ist.

Winkelstück 5 und Gehäusewandöffnung sind mit einer z.B. als Stanzbiegeteil einstückig aus Blech gefertigten Kappe 13 abdeckbar, die am Kappenende weitgehend offen ist. Das an der Kabelzuführungsseite offene Kappenende hat an der Unterkante der Seitenwände 14 je einen Haken 15, mit denen die Kappe 13 bei der Montage zuerst in entsprechende Schlitze 16 der Gehäusewand 2 eingehängt und danach so weit gekippt wird, bis die am anderen geschlossenen Kappenende 17 vorn vorgesehene Lasche 18 an der Gehäusewand 2 anliegt und an dieser z.B. mit nur einer Schraube 19, die eine sogenannte Blechschraube sein kann, lösbar befestigt wird. Bei einer flachen Kappenausführung wird das Winkelstück 5 mit Haltekamm und schrumpfschlauchfixierten Anschlußkabeln 4 zwischen elastischem Kissen 12 und Kappendeckel 20 gehalten.

Es ist jedoch zweckmäßiger die Kappe 13 mit höheren Seitenwänden 14 auszubilden und am rückwärtigen Ende des Kappendeckels 20 innen ein gleiches elastisches Kissen 21 wie das unterlegte vorzusehen, so daß der Haltekamm mit daran befestigten Anschlußkabeln 4 zwischen zwei elastischen Kissen 12, 21 fixiert ist. Das z.B. ebenfalls selbstklebend befestigte Kissen 21 gestattet den Ausgleich großer zulässiger Fertigungstoleranzen und außerdem die Befestigung von Anschlußkabeln 4 mit unterschiedlichem Durchmesser.

Die elastischen Kissen 12, 21 sind äußerst preisgünstig aus im Handel erhältlicher Meterware herstellbar. Die Meterware wird üblicherweise in Rollen geliefert, von denen die benötigten Stücke einfach abgetrennt werden.

## Patentansprüche

1. Gehäuse mit Vorrichtung zur zugentlasteten Halterung von Anschlußkabeln, die durch wenigstens eine Öffnung in das Gehäuse einführbar und an Zinken eines Haltekammes befestigbar sind, **dadurch gekennzeichnet,** daß der Haltekamm aus einem lose in Löcher (8) der Gehäusewand (2) eingesetzten Winkelstück (5) besteht, das mittels einer an der Gehäusewand (2) abnehmbar befestigten Kappe (13) fixiert ist und daß die Zinken (10) eine zur Schrumpfschlauch-Befestigung der Anschlußkabel (4) geeignete Länge haben.

2. Gehäuse mit Vorrichtung nach Anspruch 1, dadurch gekennzeichnet, daß das Winkelstück (5) mit einem elastischen Kissen (12) unterlegt ist.

3. Gehäuse mit Vorrichtung nach Anspruch 1, dadurch gekennzeichnet, daß die Kappe (13) ein auf das Winkelstück (5) drückendes elastisches Kissen (21) enthält.

4. Gehäuse mit Vorrichtunq nach Anspruch 1. dadurch Querschnitt mit zwei Schenkeln (6, 9) hat, von denen der kürzere Schenkel (6) senkrecht auf der Gehäusewand (2) steht und der längere Schenkel (9) sich in parallelem Abstand zur Gehäusewand (2) erstreckt.

5. Gehäuse mit Vorrichtung nach Anspruch 4, dadurch gekennzeichnet, daß der auf der Gehäusewand (2) stehende Schenkel (6) des Winkelstücks (5) am unteren Ende zwei in die Löcher (8) der Gehäusewand (2) eingreifende Lappen (7) hat.

6. Gehäuse mit Vorrichtung nach Anspruch 4, dadurch gekennzeichnet, daß der längere Schenkel (9) des Winkelstücks (5) sich senkrecht zur Biegekante des Winkelstücks (5) erstreckende Zinken (10) aufweist.

7. Gehäuse mit Vorrichtung nach Anspruch 1, dadurch gekennzeichnet, daß die Kappe (13) an der Kabelzuführungsseite offen ist und an diesem Kappenende zwei Haken (15) hat, mit denen sie in passende Schlitze (16) der Gehäusewand (2) eingehängt und dabei das Winkelstück (5) sowie die Öffnung (3) abdeckend mit einer an der Kappe (13) vorgesehenen Lasche (18) an der Gehäusewand (2) befestigt ist.

8. Gehäuse mit Vorrichtung nach Anspruch 7, dadurch gekennzeichnet, daß die Lasche (18) mittels einer Schraube (19) an der Gehäusewand (2) befestigt ist.

9. Gehäuse mit Vorrichtung nach Anspruch 7, dadurch gekennzeichnet, daß Winkelstück (5) und Kappe (13) jeweils einstückig aus Blech gefertigte Stanzbiegeteile sind.

10. Gehäuse mit Vorrichtung nach Anspruch 2 oder 3, dadurch gekennzeichnet, daß die elastischen Kissen (12, 21) aus einem aufgeschäumten Kunststoff bestehen.

## Claims

1. Housing with a device for holding, in a tension-relieved manner, connecting cables which can be led into the housing through at least one opening and can be fastened to tines on a holding comb, **characterised in that** the holding comb consists of an angle piece (5) which is inserted loosely in holes (8) in the housing wall (2) and is fixed by means of a cap (13) detachably fastened to the said housing wall (2), and that the tines (10) have a length which is suitable for the fastening of the connecting cables (4) by means of shrunk-on hoses.

2. Housing with a device according to claim 1,
characterised in that the angle piece (5) has an elastic pad (12) placed underneath it.

3. Housing with a device according to claim 1,
characterised in that the cap (13) contains an elastic pad (21) which presses on the angle piece (5).

4. Housing with a device according to claim 1,
characterised in that the angle piece (5) has an L-shaped cross-section with two legs (6, 9), of which the shorter leg (6) stands perpendicularly on the housing wall (2) and the longer leg (9) extends at a distance from, and parallel to, the said housing wall (2).

5. Housing with a device according to claim 4,
characterised in that, at the lower end, that leg (6) of the angle piece (5) which stands on the housing wall (2) has two tabs (7) which engage in the holes (8) in the said housing wall (2).

6. Housing with a device according to claim 4,
characterised in that the longer leg (9) of the angle piece (5) has tines (10) which extend perpendicularly to the bent edge of the angle piece (5).

7. Housing with a device according to claim 1,
characterised in that the cap (13) is open on the cable lead-in side and has, at this end of the cap, two hooks (15) with the aid of which it can be hooked into matching slots (16) in the housing wall (2) and, under these circumstances, is fastened to the said housing wall (2), with the aid of a tab (18) provided on the cap (13), in such a way as to mask the angle piece (5) and also the opening (3).

8. Housing with a device according to claim 7,
characterised in that the tab (18) is fastened to the housing wall (2) by means of a screw (19).

9. Housing with a device according to claim 7,
characterised in that the angle piece (5) and cap (13) are, in each case, bent stampings produced in one piece from sheet metal.

10. Housing with a device according to claim 2 or 3,
characterised in that the elastic pads (12, 21) consist of an expanded plastic.

## Revendications

1. Boîtier avec dispositif pour le support déchargé de traction de câbles de raccordement, qui peuvent être introduits dans le boîtier par au moins une ouverture et peuvent être fixés sur des dents d'un peigne de retenue, caractérisé en ce que le peigne de retenue comprend une pièce coudée (5) mise en place de façon détachable dans des trous (8) de la paroi du boîtier (2), pièce qui est fixée au moyen d'un capuchon (13) fixé de façon amovible sur la paroi du boîtier (2), et en ce que les dents (10) ont une longueur appropriée à la fixation par gaine rétrécissable des câbles de raccordement (4).

2. Boîtier avec dispositif selon la revendication 1, caractérisé en ce que la pièce coudée (5) est calée avec un coussin (12) élastique.

3. Boîtier avec dispositif selon la revendication 1, caractérisé en ce que le capuchon (13) contient un coussin (21) élastique appuyant sur la pièce coudée (5).

4. Boîtier avec dispositif selon la revendication 1, caractérisé en ce que la pièce coudée (5) a une section transversale en forme de L avec deux branches (6,9), la plus courte (6) étant placée verticalement sur la paroi du boîtier (2) et la plus longue (9) s'étendant à distance parallèlement à la paroi du boîtier (2).

5. Boîtier avec dispositif selon la revendication 4, caractérisé en ce que la branche (6), se trouvant sur la paroi du boîtier (2), de la pièce coudée (5) a sur l'extrémité inférieure deux pattes (7) s'engageant dans les trous (8) de la paroi du boîtier (2).

6. Boîtier avec dispositif selon la revendication 4, caractérisé en ce que la branche la plus lonque (9) de la pièce coudée (5) présente des dents (10) qui s'étendent perpendiculairement à l'arête de pliage de la pièce coudée (5).

7. Boîtier avec dispositif selon la revendication 1, caractérise en ce que le capuchon (13) est ouvert sur le côté d'arrivée du câble et présente deux crochets (15) sur cette extrémité de capuchon, avec lesquels il est accroché dans des fentes (16) adaptées de la paroi du boîtier (2) et la pièce coudée (5) ainsi que l'ouverture (3) sont fixés de façon à constituer un couverture sur la paroi du boîtier (2) avec un collier de fixation (18) prévu sur le capuchon (13).

8. Boîtier avec dispositif selon la revendication 7, caractérisé en ce que le collier de fixation (18) est fixé au moyen d'une vis (19) sur la paroi du boîtier (2).

9. Boîtier avec dispositif selon la revendication 7, caractérisé en ce que la pièce coudée (5) et le capuchon (13) sont respectivement des pièces découpées et pliées fabriquées d'une seule pièce à base de tôle.

10. Boîtier avec dispositif selon la revendication 2 ou 3, caractérisé en ce que les coussins (12, 21) élastiques sont à base d'un plastique moussé.
